# EUROPEAN PATENT SPECIFICATION

(11) **EP 3 083 205 B1**
(45) Date of publication and mention of the grant of the patent: **24.02.2021**
(21) Application number: 14827347.7
(22) Date of filing: 18.12.2014
(51) Int. Cl.: B29C 64/112, B29L 31/00, B29C 64/393, B29C 67/00, B33Y 10/00, B33Y 50/02, B33Y 30/00

(54) **INTEGRATED MEASURING AND ADDITIVE MANUFACTURING APPARATUS AND METHOD**
VORRICHTUNG UND VERFAHREN ZUR INTEGRIERTEN MESSUNG UND ADDITIVEN FERTIGUNG
APPAREIL ET PROCÉDÉ INTÉGRÉS DE MESURE ET DE FABRICATION ADDITIVE

(30) Priority: 20.12.2013 US 201361919226 P
(43) Date of publication of application: 26.10.2016
(73) Proprietor: Hexagon Metrology, Inc., North Kingstown, Rhode Island 02852 (US)
(72) Inventor: CREUZER, Michael, North Kingstown, Rhode Island 02852 (US); FETTER, William, North Kingstown, Rhode Island 02852 (US)
(74) Representative: Kaminski Harmann
(86) International application number: PCT/US2014/071177
(87) International publication number: WO 2015/095531

(56) References cited:
- WO-A2-2004/024447
- US-A1- 2004 251 581
- US-A1- 2007 228 592

## Description

### FIELD OF THE INVENTION

The invention generally relates to manufacturing objects and, more particularly, the invention relates to integrating object measurement with object manufacture.

### BACKGROUND OF THE INVENTION

Manufactured objects are produced using a wide variety of technologies. One longstanding technique machines a part, removing portions from a substrate or other piece of material (e.g., a metal gear). Injection molding, another widely used manufacturing technique, typically cures molten plastic within a mold. Another newer technique, known as three-dimensional printing ("3D printing"), produces an object by depositing successive layers of material onto a base or platform. For example, a 3D printer can produce a smartphone case from a plurality of successively deposited plastic layers.

To confirm it meets its design requirements, the object often is measured after it is manufactured. For example, a measuring device, such as a coordinate measuring machine ("CMM"), may measure various prescribed distances within the noted smartphone case. If the case is too small, it may not be able to receive its internal electronic components (e.g., printed circuit boards, batteries, etc.). Accordingly, as the smartphone case highlights, if a manufactured object is not the right size, it often is discarded because it cannot meet its design requirements. Undesirably, this problem can happen for large runs of manufactured objects, causing significant loss and delaying ultimate product delivery to customers.
For example, WO 2004/024447 concerns various aspects to calibrate, optimize, or indicate the need for replacement of or evaluation of one or more printing heads or nozzles of the three-dimensional model printer, by disposing one or more specifically dedicated measuring blocks by the printer, which is thereafter sensed for its height, weight or volume. US 2013/0101729 is concerned with flatness of layers in additive printing, which, undesirably, may increase dimensional inaccuracies.

### SUMMARY OF THE INVENTION

In accordance with one embodiment of the invention, an apparatus for producing an object has an additive printing device for producing a three-dimensional object in a plurality of layers, and a measuring device for measuring the object during the printing process. The apparatus also has a controller operatively coupled with the measuring device. The controller is configured to control the measuring device to measure the object at one or more prescribed points in the printing process (i.e., before the object is manufactured).

The one or more prescribed points may include after deposition of a given layer. For example, the one or more prescribed points may include before deposition of the next layer being deposited after the given layer. In fact, the one or more prescribed points may include after deposition of a portion of the given layer.

Among other things, the measuring device includes a coordinate measuring machine, and the additive printing device may be integrated into the coordinate measuring machine. Furthermore, the additive printing device may include a 3D printer, and the measuring device may be integrated into the 3D printer.

The invention also has a checker operatively coupled with the additive printing device and the measuring device. The checker is configured to alter subsequent printing by the additive printing device as a function of the at least one measurement of the measuring device. For example, the apparatus may include an input to receive a virtual model of the object. In that case, the checker may be configured 1) to compare the at least one measurement against the virtual model of the object, and the checker according to the invention is configured 2) to alter subsequent printing if the at least one measurement is beyond a prescribed threshold (e.g., a range).

The measuring device may include at least one of a structured white light, a fiber optic probe, a laser scanner, and/ or an analog scanner. In addition or alternatively, the measuring device may include at least one of an adjustable field of view and a fixed field of view. Moreover, the measuring device may have a probe, while the additive printing device including a print head. In that case, the print head may be coupled with the probe.

In accordance with another embodiment, a method of producing an object causes an additive printing device to print an object in a plurality of layers according to a prescribed printing process having prescribed parameters. The method also measures at least one feature of the object during the printing process.

For example, the method may measure the at least one feature after the additive printing device completes printing a given layer, but before a subsequent layer is printed.

Illustrative embodiments of the invention are implemented as a computer program product having a computer usable medium with computer readable program code thereon. The computer readable code may be read and utilized by a computer system in accordance with conventional processes.

### BRIEF DESCRIPTION OF THE DRAWINGS

Those skilled in the art should more fully appreciate advantages of various embodiments of the invention from the following "Description of Illustrative Embodiments," discussed with reference to the drawings summarized immediately below.
Figure 1 schematically shows an additive printing device having measuring capability in accordance with illustrative embodiments of the invention.
Figure 2 schematically shows logic for managing the printing process in accordance with illustrative embodiments of the invention.
Figure 3 shows a process of measuring an object during the 3-D printing process in accordance with illustrative embodiments of the invention.

### DESCRIPTION OF ILLUSTRATIVE EMBODIMENTS

In illustrative embodiments, a system for producing an object has additive printing capabilities with integrated measurement capability for precisely measuring an object as it is being printed. Among other things, the system may incorporate a conventional additive printing device, such as a 3-D printer for printing the object, while the measuring capability may incorporate a coordinate measuring machine ("CMM") for measuring the object as it is printed.

Accordingly, the system may measure the object during the printing process -there is no need to wait for the printing process to fully produce the object. If the system identifies an error in the size or shape of the object before it is fully produced, then the apparatus may 1) adjust the process "on-the-fly" to produce a more geometrically accurate object, or 2) discard the object without wasting any further time on the geometrically defective object. Details of illustrative embodiments are discussed below.

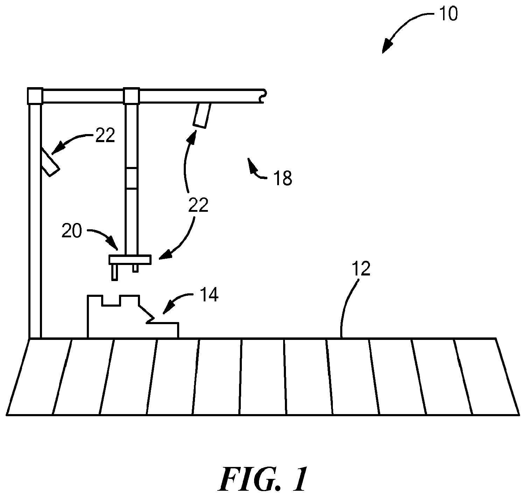

Figure 1 schematically shows a combination system 10 having measuring and 3-D printing capability configured in accordance with illustrative embodiments of the invention. The combination system 10 includes a platform 12 supporting an object 14 being printed, and mechanisms for printing and measuring the object 14 as it is being produced. More specifically, the platform 12 may include a support structure 18 for supporting and manipulating any of a wide variety of 3-D printing and measuring technologies. For example, the support structure 18 may support a movable printer head 20 for depositing material onto the substrate/ growing object 14, and measurement components 22, such as lasers, cameras, or tactile sensors.

Those skilled in the art can apply any of a number of different measurement technologies, either alone or in combination, to measure the object 14 during the printing process. Among other things, those measurement technologies may include:
1. A structured white light,
2. A fiber-optic probe,
3. A laser scanner, or
4. A tactile sensor, such as an analog scanner.

Exemplary implementations of each of these technologies are discussed immediately below. It should be noted that those implementations are intended to be illustrative and not limit other embodiments of the invention.

### Structured White Light

As known by those skilled in the art, a structured white light sensor projects a random pattern on an object 14 and triggers a simultaneous capture of the area of interest by converged cameras. Figure 1 schematically shows three converged cameras (identified by reference number 22), although other numbers of cameras should suffice. Algorithms correlate the images of the cameras to create a 3-D point cloud representation of the area. The sensor also acquires clear black-and-white images to accurately measure specific features, such as holes and edges. Illustrative embodiments use the structured white light sensor to feedback measurement data to the printer (e.g., via the point cloud), thus enabling in- process adjustments to the printing process (discussed below).

Those skilled in the art can use any of a number of different techniques to incorporate the white light sensor and 3-D printer into a single apparatus. Among others things, illustrative embodiments may use an adjustable field of view that can be scaled to the size of the object 14 being printed. In addition or alternatively, illustrative embodiments may use a fixed field of view equal to the size of the 3-D printing table/platform 12.

Moreover, the white light sensor may be mounted with a fixed or adjustable field of view to a 6 degree of freedom articulated robot that is independent of the printing apparatus. Accordingly, this embodiment permits this white light sensor to be in any orientation relative to the object 14.

Some embodiments mount the white light sensor with a fixed or adjustable field of view on a 2-D or 3-D positionable arm incorporated into the printing structure. In fact, this embodiment may mount the white light sensor to be independent of the printer head 20. Conversely, other embodiments may mount the white light sensor with a fixed or adjustable field of view directly to the printer head 20.

### Fiber Optic Probe

Some embodiments use a point laser sensor that can operate by means of a laser point focused on the object 14 and transmitted via some conventional medium, such as, among other things, a fiber-optic channel. A camera may measure the light of the laser reflected from the object 14.

In a manner similar to other discussed sensors, the point laser sensor may be implemented in a number of ways. For example, the fiber-optic probe sensor may be attached to the printer head 20, or mounted to a six degree of freedom articulated robot that is independent of the 3-D printer. Alternatively, the fiber-optic probe sensor may be mounted on a 3-D positionable arm incorporated into the structure of the 3-D printer and thus, be independent of the printer head 20.

### Laser Scanning

Illustrative embodiments may incorporate a laser scanning sensor that operates by means of a triangulation principle, or a flying dot principle. The system 10 may create a 3-D point cloud using a camera to measure the laser light reflected from the object 14.

As with other discussed sensors, the laser scanning sensor may be implemented in a number of ways. For example, the laser scanning sensor may be attached to the printer head 20, or mounted to a six degree of freedom articulated robot that is independent of the 3-D printer. Alternatively, the laser scanning sensor may be mounted on a 2-D or 3-D positionable arm incorporated into the structure of the 3-D printer and thus, be independent of the printer head 20. Moreover, the laser scanning sensor may be attached in a fixed position to the 3-D printer structure, such as the printer platform 12.

### Analog Scanning

Another embodiment may use a contact touch sensor that operates by physically contacting the object 14 with a probe sensor and recording point deviations on the surface of the object 14.

In a manner similar to other embodiments, the analog scanning sensor may be implemented in a number of ways. For example, the analog scanning sensor may be attached to the printer head 20, or mounted to a six degree of freedom articulated robot that is independent of the 3-D printer. Alternatively, the analog scanning sensor may be mounted on a 2-D or 3-D positionable arm incorporated into the structure of the 3-D printer and thus, is independent of the printer head 20.

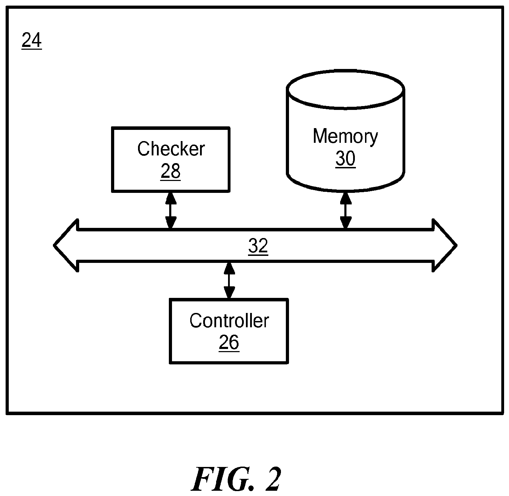

Figure 2 schematically shows illustrative logic 24 for managing the printing process in accordance with illustrative embodiments of the invention. This logic 24 can be directly integrated into the 3-D printer shown in Figure 1, or spaced apart from the 3-D printer. For example, this logic 24 may communicate with the 3-D printer through a local area network or a wide area network, such as the Internet.

The logic 24 includes a controller 26 configured to manage system processes (e.g., general printing and measuring processes), a checker 28 configured to determine whether measurements of the object 14 are within prescribed specifications, and memory 30 for storing data and processing code. For example, the memory 30 may store a dimensionally accurate computer-aided design model ("CAD model") of the object 14.

Accordingly, as discussed in greater detail below, the checker 28 can compare the measurements received from the measuring device (e.g., in the form of a point cloud) against the dimensions in the CAD model to determine the dimensional accuracy of the object 14. Any of a number of different interconnection systems may connect these components together to perform their functions. For example, Figure 2 shows a single bus acting as an interconnection system 32, although those skilled in the art may consider other interconnection systems appropriate for their particular application. Moreover, although Figure 2 shows only several functional components, this logic 24 may include a wide variety of additional components that can further assist with the required task.

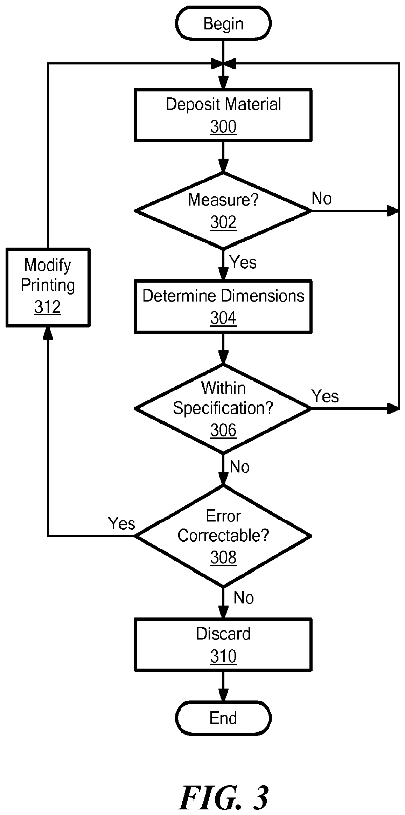

Figure 3 shows a process of measuring an object 14 during the 3-D printing process in accordance with illustrative embodiments of the invention. It should be noted that this process is a simplified version of a more complex process of producing the object 14. As such, the actual process may have additional steps that are not discussed. In addition, some steps may be performed in a different order, or in parallel with each other. Accordingly, discussion of this process is illustrative and not intended to limit various embodiments of the invention. Finally, although this process is discussed with regard to producing a single object 14, the process of Figure 3 can be expanded to cover processes for producing a plurality of objects 14 at the same time.

The system 10 can produce any of a number of different types of objects 14 amenable to additive printing processes. For example, the 3-D printer may produce a toy, such as a toy house or toy car, a household device, such as a chair or lamp, a part of a larger object 14, such as a car bumper or wheel, an industrial item, such as a gear or propeller, a medical related apparatus, such as a prosthetic, a food product, such as pizza, chocolate, or cake, clothing, or any of a wide variety of other items. Accordingly, as suggested by this short list, the 3-D printer may form objects 14 from any of a variety of different materials or combinations of materials, such as plastics, rubbers, metals, ceramics, food, silicon, or other known material conventionally used in additive printing/ manufacturing processes, such as 3-D printing.

The process begins at step 300, in which the printer deposits material onto the platform 12. Specifically, as known by those skilled in the art, the printer forms the object 14 by depositing layers on top of prior formed layers in precisely prescribed manners. Accordingly, step 300 deposits either a first layer of material onto the platform 12 (if the process just is beginning), or an additional layer of material onto a previously deposited and preferably cured layer of material.

The process then determines if it is to measure the object 14 in its current, unformed state (step 302). More specifically, the system 10 may be programmed to measure the object 14 at prescribed points in its production process. These points may be based upon the number of layers then currently formed. For example, this step may measure the object 14 after each layer is deposited, after every other layer is deposited, after every third layer is deposited, etc. (or before certain other layers are formed). As another example, this step may measure the object 14 after a portion or fraction of every one or more layers are formed (e.g., after every 2.35 layers, the system 10 may measure the object 14, or after certain prescribed features are formed).

Alternatively, some embodiments may measure the object 14 after some prescribed amount of time is passed since a previous measurement, since the beginning of the process, or after some other event has occurred (after a certain feature is measured and approved as accurate). For example, an object 14 expected to take three minutes to form may be measured at 45 second intervals after the first layer is formed.

Accordingly, if no measurement is to be taken at this point, the process loops back to step 302 to deposit additional material. Conversely, if a measurement is to be taken, then the process continues to step 304, which determines the dimensions of the object 14. In some embodiments, the process obtains all major exposed dimensions (e.g., using a point cloud), while in other embodiments, the process obtains only a limited number of dimensions (e.g., using the analog scanner).

The process therefore uses one of the above noted modalities for measuring features of some or all portions of the object 14; namely, the modality associated with the particular apparatus printing the object 14 makes the measurement. If the material is expected to exhibit a change in its geometry before it cures (e.g., it shrinks to some extent after deposited but before curing), then this step may be delayed until after it is fully or partially cured. Moreover, if the system 10 measures using an analog scanner, which physically contacts the growing object 14, then it may be most desirable to wait for the object 14 to cure (e.g., via convective or ambient cooling processes, or application of a curing light at a prescribed wavelength) before taking a measurement.

Next, at step 306, the checker 28 determines if the measurements are within prescribed specifications for the object 14. In other words, the checker 28 determines if the measured dimensions are within prescribed size range(s) and, if not, whether to modify the process. To that end, the checker 28 accesses the CAD model (or other object dimensional data or specification) within memory 30 to determine the specified dimensions of the object 14. For example, the CAD model may specify that a certain dimension should measure between a first and second size. Among other ways, if using a white light sensor or similar technology, the process may compare a point cloud, or some portion of the point cloud, to a corresponding portion of the CAD model in memory 30. Accordingly, a dimension outside of that specification represents an error in the printing process.

If the measurements are within the measurement specifications (and the object 14 is not fully complete), then the process loops back to step 300 to print the next layer(s) and/or complete printing the current layer. If, however, the measurements are outside of the measurement specifications, the controller 26 determines if the error is correctable for the current object 14 being produced (step 308). In other words, the process determines if the error so great at this point in the process that a change to the production process still would not be enough to cause the object 14 then being produced to have an acceptable amount of deviation. Accordingly, if the controller 26 determines that the object 14 is not correctable, then the process may simply discard the object 14 at step 310, and end the process.

Conversely, if the production process can be changed, then the controller 26 determines how best to make the change at this point (step 312). For example, the controller 26 may gradually reduce the width of the above noted oversized wall for the next several layers until it reaches an appropriate width.

The controller 26 or other logic also modifies/alters the printing parameters and the underlying printing processes for printing additional objects 14 in other production runs. Specifically, among other things, the controller 26 may use machine learning techniques to produce subsequent like objects 14 within the prescribed specification. For example, if the checker 28 identifies that current configurations produce a certain wall of the object 14 three millimeters too wide, then step 312 may alter the underlying logic 24 and/or operating parameters to cause the printer head 20 to alter 1) its prescribed path, 2) the amount or composition of material to deposit, 3) timing of depositing certain materials, 4) etc. to reduce the width of that wall when forming subsequent layers of the object 14.

Using this immediate feedback loop, illustrative embodiments thus detect production flaws early in the production process-not after production of several, hundreds, or thousands of objects 14. This can significantly reduce the net time to produce the objects 14, and save the cost of disposing of many out of specification items.

Indeed, illustrative embodiments are implemented as a combined 3-D printing device and measuring device (e.g., a CMM). Some embodiments, however, can retrofit existing devices having only one of the two main functionalities discussed. Specifically, a CMM can be retrofitted with 3-D printing capabilities, or a 3-D printer may be retrofitted with a CMM or other measurement apparatus 22.

Various embodiments of the invention may be implemented at least in part in any conventional computer programming language. For example, some embodiments may be implemented in a procedural programming language (*e.g*., "C"), or in an object oriented programming language *(e.g.,* "C++"). Other embodiments of the invention may be implemented as preprogrammed hardware elements (*e.g*., application specific integrated circuits, FPGAs, and digital signal processors), or other related components.

In an alternative embodiment, the disclosed apparatus and methods (e.g., see the various flow charts described above) may be implemented as a computer program product for use with a computer system. Such implementation may include a series of computer instructions fixed either on a tangible, non-transitory medium, such as a computer readable medium (*e.g.,* a diskette, CD-ROM, ROM, or fixed disk). The series of computer instructions can embody all or part of the functionality previously described herein with respect to the system.

Those skilled in the art should appreciate that such computer instructions can be written in a number of programming languages for use with many computer architectures or operating systems. Furthermore, such instructions may be stored in any memory device, such as semiconductor, magnetic, optical or other memory devices, and may be transmitted using any communications technology, such as optical, infrared, microwave, or other transmission technologies.

Among other ways, such a computer program product may be distributed as a removable medium with accompanying printed or electronic documentation *(e.g.,* shrink wrapped software), preloaded with a computer system *(e.g.,* on system ROM or fixed disk), or distributed from a server or electronic bulletin board over the network *(e.g.,* the Internet or World Wide Web). Of course, some embodiments of the invention may be implemented as a combination of both software (*e.g*., a computer program product) and hardware. Still other embodiments of the invention are implemented as entirely hardware, or entirely software.

Although the above discussion discloses various exemplary embodiments of the invention, it should be apparent that those skilled in the art can make various modifications that will achieve some of the advantages of the invention without departing from the true scope of the claims.

## Claims

1. An apparatus (10) for producing an object, the apparatus comprising:
an additive printing device for producing a three-dimensional object (14), the three-dimensional object (14) being produced from a dimensionally accurate nominal model having object specifications;
a coordinate measuring machine for measuring at least one dimension of the object (14) during a printing process of the object (14);
a controller (26) operatively coupled with the coordinate measuring machine, the controller (26) being configured to control the measuring device to measure the object (14) at one or more prescribed points during the printing process; and
a checker (28) operatively coupled with the additive printing device and the coordinate measuring machine, the coordinate measuring machine producing at least one dimensional measurement of the object (14) during the printing process, the checker (28) being configured to alter subsequent manufacturing by the additive printing device as a function of the at least one dimensional measurement.

2. The apparatus (10) as defined by claim 1 wherein the additive printing device produces the three-dimensional object in a plurality of layers, particularly wherein
the additive printing device is integrated into the coordinate measuring machine; or
the additive printing device includes a 3D printer, and the coordinate measuring machine is integrated into the 3D printer.

3. The apparatus (10) as defined by claim 2 wherein the one or more prescribed points include after deposition of a given layer, particularly wherein
a next layer succeeds the given layer, the one or more prescribed points including before deposition of the next layer, or
the one or more prescribed points include after deposition of a portion of the given layer.

4. The apparatus as defined by claim 1 further comprising an input for receiving a virtual model of the object, the checker being configured to compare the at least one measurement against the virtual model of the object, the checker being configured to alter subsequent manufacturing if the at least one measurement is beyond a prescribed threshold.

5. The apparatus as defined by claim 1 wherein the measuring device includes
at least one of a structured white light, a fiber optic probe, a laser scanner, and/ or an analog scanner; and/ or
at least one of an adjustable field of view and a fixed field of view.

6. The apparatus as defined by claim 1 wherein the coordinate measuring machine includes a probe, the additive printing device including a print head, the print head being coupled with the probe.

7. A method of producing an object (14), the method comprising:
causing an additive printing device to print (300) an object (14) according to a prescribed printing process having prescribed parameters, at least part of the prescribed parameters being obtained from a dimensionally accurate nominal model having object specifications;
measuring (304), using a coordinate measuring machine, at least one dimension of at least one feature of the object (14) during the printing process of the object (14), wherein measuring at least one dimension produces at least one measurement;
checking, using a checker (28) operatively coupled with the coordinate measuring machine, the dimensional accuracy of at least one dimension by comparing the at least one measurement with at least one object specification for the nominal model of the three-dimensional object (14); and
altering subsequent production of the object (14) by the additive printing device as a function of the dimensional accuracy of the at least one measured dimension.

8. The method as defined by claim 7 wherein causing comprises causing the additive printing device to print (300) the object (14) in a plurality of layers according to the prescribed printing process, particularly wherein the additive printing device comprises a 3D printer, particularly wherein the method further comprises determining that a given layer has been printed, the method measuring a dimension of at least one feature after determining that the given layer has been printed.

9. The method as defined by claim 8 wherein measuring (304) comprises:
measuring the at least one dimension after the additive printing device completes printing a given layer, particularly wherein the additive printing device prints a subsequent layer after the given layer, measuring comprising measuring the at least one dimension before the subsequent layer is printed;
measuring at least one dimension when the printing device is not printing a layer on the object (14); or
measuring at least one dimension when the printing device is printing a layer on the object (14).

10. The method as defined by claim 8 further comprising comparing the measurement against a virtual model of the object (14), the method modifying at least one prescribed parameter if the measurement exceeds a prescribed threshold.

11. The method as defined by claim 8 wherein the additive printing device is integrated into the coordinate measuring machine, or
comprises a 3D printer, the coordinate measuring machine being integrated into the 3D printer.

12. A computer program product for use on a computer system for producing a physical object (14), the computer program product comprising a tangible, non-transient computer usable medium having computer readable program code thereon, the computer readable program code comprising:
program code for causing an additive printing device to print (300) an object (14) according to a prescribed printing process having prescribed parameters, at least part of the prescribed parameters being obtained from a dimensionally accurate nominal model having object specifications;
program code for causing a coordinate measuring machine to measure (304) at least one dimension of at least one feature of the object (14) during the printing process of the object (14), the coordinate measuring machine producing at least one measurement;
program code for causing a checker (28) to determine whether at least one measurement is dimensionally accurate by comparing the at least one dimension with at least one object specification for the nominal model of the three-dimensional object (14); and
program code for causing the additive printing device to alter subsequent production of the object (14) as a function of the dimensional accuracy of the at least one measured dimension.

13. The computer program product as defined by claim 12 wherein the program code for causing the additive printing device to print (300) the object (14) comprises program code for causing the additive printing device to print (300) the object (14) in a plurality of layers according to the prescribed printing process, particularly wherein the additive printing device comprises a 3D printer.

14. The computer program product as defined by claim 13 wherein program code for measuring comprises program code for measuring the at least one feature after the additive printing device completes printing a given layer, particularly wherein
the additive printing device prints a subsequent layer after the given layer, the program code for causing a coordinate measuring machine to measure comprising program code for measuring the at least one feature before the subsequent layer is printed; or
the program code for causing a coordinate measuring machine to measure comprises program code for measuring at least one dimension when the printing device is not printing a layer on the object (14); or
the program code for causing a coordinate measuring machine to measure comprises program code for measuring at least one dimension when the printing device is printing a layer on the object (14).

15. The computer program product as defined by claim 13 further comprising program code for
determining that a given layer has been printed, the computer program product including program code for causing a coordinate measuring machine to measure (304) a dimension of at least one feature after determining that the given layer has been printed; and/or
for comparing the measurement against a virtual model of the object, the computer program product further including program code for modifying at least one prescribed parameter if the measurement exceeds a prescribed threshold.

## Patentansprüche

1. Vorrichtung (10) zur Herstellung eines Objekts, wobei die Vorrichtung Folgendes umfasst:
eine Additivdruckvorrichtung zur Herstellung eines dreidimensionalen Objekts (14), wobei das dreidimensionale Objekt (14) ausgehend von einem maßgenauen nominalen Modell hergestellt wird, das Objektspezifikationen aufweist;
eine Koordinatenmessmaschine zum Messen wenigstens eines Maßes des Objekts (14) während eines Vorgangs des Druckens des Objekts (14);
eine Steuerungseinrichtung (26), die mit der Koordinatenmessmaschine wirkmäßig gekoppelt ist, wobei die Steuerungseinrichtung (26) dafür ausgelegt ist, die Messvorrichtung zu steuern, um das Objekt (14) an einem oder mehreren vorgegebenen Punkten während des Druckvorgangs zu messen; und
eine Prüfeinrichtung (28), die mit der Additivdruckvorrichtung und der Koordinatenmessmaschine wirkmäßig gekoppelt ist, wobei die Koordinatenmessmaschine wenigstens einen Dimensionsmesswert des Objekts (14) während des Druckvorgangs erzeugt, wobei die Prüfeinrichtung (28) dafür ausgelegt ist, die darauffolgende Fertigung durch die Additivdruckvorrichtung als Funktion des wenigstens einen Dimensionsmesswerts zu ändern.

2. Vorrichtung (10) nach Anspruch 1, wobei die Additivdruckvorrichtung das dreidimensionale Objekt in einer Vielzahl von Schichten herstellt,
wobei insbesondere
die Additivdruckvorrichtung in die Koordinatenmessmaschine integriert ist; oder
die Additivdruckvorrichtung einen 3D-Drucker beinhaltet und die Koordinatenmessmaschine in den 3D-Drucker integriert ist.

3. Vorrichtung (10) nach Anspruch 2, wobei der eine oder die mehreren vorgegebenen Punkte nach der Ablagerung einer gegebenen Schicht beinhalten, wobei insbesondere
eine nächste Schicht auf die gegebene Schicht folgt, wobei der eine oder die mehreren vorgegebenen Punkte vor der Ablagerung der nächsten Schicht beinhalten, oder
der eine oder die mehreren vorgegebenen Punkte nach der Ablagerung eines Teils der gegebenen Schicht beinhalten.

4. Vorrichtung nach Anspruch 1, ferner umfassend einen Eingang zum Empfangen eines virtuellen Modells des Objekts, wobei die Prüfeinrichtung dafür ausgelegt ist, den wenigstens einen Messwert mit dem virtuellen Modell des Objekts zu vergleichen, wobei die Prüfeinrichtung dafür ausgelegt ist, die darauffolgende Fertigung zu ändern, wenn sich der wenigstens eine Messwert jenseits eines vorgegebenen Schwellenwerts befindet.

5. Vorrichtung nach Anspruch 1, wobei die Messvorrichtung Folgendes beinhaltet:
wenigstens eines aus einem strukturierten weißen Licht, einer faseroptischen Sonde, einem Laserscanner und/oder einem analogen Scanner; und/oder
wenigstens eines aus einem einstellbaren Sichtfeld und einem feststehenden Sichtfeld.

6. Vorrichtung nach Anspruch 1, wobei die Koordinatenmessmaschine eine Sonde beinhaltet, wobei die Additivdruckvorrichtung einen Druckkopf beinhaltet, wobei der Druckkopf mit der Sonde gekoppelt ist.

7. Verfahren zur Herstellung eines Objekts (14), wobei das Verfahren Folgendes umfasst:
Veranlassen, dass eine Additivdruckvorrichtung ein Objekt (14) gemäß einem vorgegebenen Druckvorgang druckt (300), der vorgegebene Parameter aufweist, wobei wenigstens ein Teil der vorgegebenen Parameter aus einem maßgenauen nominalen Modell gewonnen wird, das Objektspezifikationen aufweist;
Messen (304), unter Verwendung einer Koordinatenmessmaschine, wenigstens eines Maßes wenigstens eines Merkmals des Objekts (14) während des Vorgangs des Druckens des Objekts (14), wobei das Messen des wenigstens einen Maßes wenigstens einen Messwert erzeugt;
Prüfen, unter Verwendung einer wirkmäßig mit der Koordinatenmessmaschine gekoppelten Prüfeinrichtung (28), der Maßgenauigkeit wenigstens eines Maßes, indem der wenigstens eine Messwert mit wenigstens einer Objektspezifikation für das nominale Modell des dreidimensionalen Objekts (14) verglichen wird; und
Ändern der darauffolgenden Herstellung des Objekts (14) durch die Additivdruckvorrichtung als Funktion der Maßgenauigkeit des wenigstens einen gemessenen Maßes.

8. Verfahren nach Anspruch 7, wobei das Veranlassen umfasst, die Additivdruckvorrichtung zu veranlassen, das Objekt (14) in einer Vielzahl von Schichten gemäß dem vorgegebenen Druckvorgang zu drucken (300), wobei die Additivdruckvorrichtung insbesondere einen 3D-Drucker umfasst, wobei das Verfahren ferner insbesondere umfasst, zu bestimmen, dass eine gegebene Schicht gedruckt wurde, wobei das Verfahren ein Maß wenigstens eines Merkmals misst, nachdem bestimmt wurde, dass die gegebene Schicht gedruckt wurde.

9. Verfahren nach Anspruch 8, wobei das Messen (304) Folgendes umfasst:
Messen des wenigstens einen Maßes, nachdem die Additivdruckvorrichtung das Drucken einer gegebenen Schicht abgeschlossen hat, wobei die Additivdruckvorrichtung insbesondere eine darauffolgende Schicht nach der gegebenen Schicht druckt, wobei das Messen das Messen des wenigstens eines Maßes umfasst, bevor die darauffolgende Schicht gedruckt wird;
Messen wenigstens eines Maßes, wenn die Druckvorrichtung keine Schicht auf dem Objekt (14) druckt; oder
Messen wenigstens eines Maßes, wenn die Druckvorrichtung eine Schicht auf dem Objekt (14) druckt.

10. Verfahren nach Anspruch 8, ferner umfassend das Vergleichen des Messwerts mit einem virtuellen Modell des Objekts (14), wobei das Verfahren wenigstens einen vorgegebenen Parameter modifiziert, wenn der Messwert einen vorgegebenen Schwellenwert übersteigt.

11. Verfahren nach Anspruch 8, wobei die Additivdruckvorrichtung in die Koordinatenmessmaschine integriert ist oder einen 3D-Drucker umfasst, wobei die Koordinatenmessmaschine in den 3D-Drucker integriert ist.

12. Computerprogrammprodukt zur Verwendung in einem Computersystem zur Erzeugung eines physischen Objekts (14), wobei das Computerprogrammprodukt ein greifbares, nichtflüchtiges, von einem Computer verwendbares Medium umfasst, auf dem sich ein computerlesbarer Programmcode befindet, wobei der computerlesbare Programmcode Folgendes umfasst:
einen Programmcode zum Veranlassen einer Additivdruckvorrichtung, ein Objekt (14) gemäß einem vorgegebenen Druckvorgang zu drucken (300), der vorgegebene Parameter aufweist, wobei wenigstens ein Teil der vorgegebenen Parameter aus einem maßgenauen nominalen Modell gewonnen wird, das Objektspezifikationen aufweist;
einen Programmcode zum Veranlassen einer Koordinatenmessmaschine, während des Vorgangs des Druckens des Objekts (14) wenigstens ein Maß wenigstens eines Merkmals des Objekts (14) zu messen (304), wobei die Koordinatenmessmaschine wenigstens einen Messwert erzeugt;
einen Programmcode zum Veranlassen einer Prüfeinrichtung (28), zu bestimmen, ob wenigstens ein Messwert maßgenau ist, indem das wenigstens eine Maß mit wenigstens einer Objektspezifikation für das nominale Modell des dreidimensionalen Objekts (14) verglichen wird; und
einen Programmcode zum Veranlassen der Additivdruckvorrichtung, die darauffolgende Herstellung des Objekts (14) als Funktion der Maßgenauigkeit des wenigstens einen gemessenen Maßes zu ändern.

13. Computerprogrammprodukt nach Anspruch 12, wobei der Programmcode zum Veranlassen der Additivdruckvorrichtung, das Objekt (14) zu drucken (300), einen Programmcode zum Veranlassen der Additivdruckvorrichtung umfasst, das Objekt (14) in einer Vielzahl von Schichten gemäß dem vorgegebenen Druckvorgang zu drucken (300), wobei die Additivdruckvorrichtung insbesondere einen 3D-Drucker umfasst.

14. Computerprogrammprodukt nach Anspruch 13, wobei der Programmcode zum Messen einen Programmcode zum Messen des wenigstens einen Merkmals umfasst, nachdem die Additivdruckvorrichtung das Drucken einer gegebenen Schicht abgeschlossen hat, wobei insbesondere
die Additivdruckvorrichtung eine darauffolgende Schicht nach der gegebenen Schicht druckt, wobei der Programmcode zum Veranlassen einer Koordinatenmessmaschine, eine Messung durchzuführen, einen Programmcode zum Messen des wenigstens einen Merkmals umfasst, bevor die darauffolgende Schicht gedruckt wird; oder
der Programmcode zum Veranlassen einer Koordinatenmessmaschine, eine Messung durchzuführen, einen Programmcode zum Messen wenigstens eines Maßes umfasst, wenn die Druckvorrichtung keine Schicht auf dem Objekt (14) druckt; oder
der Programmcode zum Veranlassen einer Koordinatenmessmaschine, eine Messung durchzuführen, einen Programmcode zum Messen wenigstens eines Maßes umfasst, wenn die Druckvorrichtung eine Schicht auf dem Objekt (14) druckt.

15. Computerprogrammprodukt nach Anspruch 13, ferner umfassend einen Programmcode
zum Bestimmen, dass eine gegebene Schicht gedruckt wurde, wobei das Computerprogrammprodukt einen Programmcode beinhaltet, um eine Koordinatenmessmaschine zu veranlassen, ein Maß wenigstens eines Merkmals zu messen (304), nachdem bestimmt wurde, dass die gegebene Schicht gedruckt wurde; und/oder
zum Vergleichen des Messwerts mit einem virtuellen Modell des Objekts, wobei das Computerprogrammprodukt ferner einen Programmcode beinhaltet, um wenigstens einen vorgegebenen Parameter zu modifizieren, wenn der Messwert einen vorgegebenen Schwellenwert übersteigt.

## Revendications

1. Appareil (10) destiné à produire un objet, ledit appareil comprenant :
une imprimante de fabrication additive destinée à produire un objet tridimensionnel (14), ledit objet tridimensionnel (14) étant produit à partir d'un modèle nominal dimensionnellement exact doté de spécifications d'objet ;
une machine de mesure de coordonnées destinée à mesurer au moins une dimension de l'objet (14) pendant un processus d'impression de l'objet (14) ;
un contrôleur (26) couplé de manière fonctionnelle à la machine de mesure de coordonnées, ledit contrôleur (26) étant conçu pour commander l'instrument de mesure afin de mesurer l'objet (14) en un ou plusieurs points prescrits pendant le processus d'impression ; et
un vérificateur (28) couplé de manière fonctionnelle à l'imprimante de fabrication additive et à la machine de mesure de coordonnées, ladite machine de mesure de coordonnées produisant au moins une mesure dimensionnelle de l'objet (14) pendant le processus d'impression, le vérificateur (28) étant conçu pour modifier la suite de la fabrication par l'imprimante de fabrication additive en fonction de ladite au moins une mesure dimensionnelle.

2. Appareil (10) selon la revendication 1, dans lequel l'imprimante de fabrication additive produit l'objet tridimensionnel en une pluralité de couches, notamment dans lequel
l'imprimante de fabrication additive est intégrée à la machine de mesure de coordonnées ; ou
l'imprimante de fabrication additive comprend une imprimante 3D, et la machine de mesure de coordonnées est intégrée à ladite imprimante 3D.

3. Appareil (10) selon la revendication 2, dans lequel ledit un ou plusieurs points prescrits comprend après le dépôt d'une couche donnée, notamment dans lequel
une couche suivante succède à la couche donnée, ledit un ou plusieurs points prescrits comprenant avant le dépôt de ladite couche suivante, ou
ledit un ou plusieurs points prescrits comprend après le dépôt d'une partie de la couche donnée.

4. Appareil selon la revendication 1, comprenant en outre une entrée destinée à recevoir un modèle virtuel de l'objet, le vérificateur étant conçu pour comparer l'au moins une mesure et le modèle virtuel de l'objet, le vérificateur étant conçu pour modifier la suite de la fabrication si l'au moins une mesure est inférieure à un seuil prescrit.

5. Appareil selon la revendication 1, dans lequel l'instrument de mesure comporte
une lumière blanche structurée, une sonde à fibre optique, un numériseur laser et/ou un numériseur analogique ; et/ou
un champ de vision réglable et/ou un champ de vision fixe.

6. Appareil selon la revendication 1, dans lequel la machine de mesure de coordonnées comprend une sonde, l'imprimante de fabrication additive comprenant une tête d'impression, ladite tête d'impression étant couplée à la sonde.

7. Procédé de production d'un objet (14), comprenant les étapes suivantes :
faire imprimer (300) un objet (14) par une imprimante de fabrication additive selon un processus d'impression prescrit possédant des paramètres prescrits, au moins une partie desdits paramètres prescrits étant obtenus à partir d'un modèle nominal dimensionnellement exact doté de spécifications d'objet ;
mesurer (304), au moyen d'une machine de mesure de coordonnées, au moins une dimension d'au moins une caractéristique de l'objet (14) pendant le processus d'impression de l'objet (14), ledit mesurage d'au moins une dimension produisant au moins une mesure ;
vérifier, au moyen d'un vérificateur (28) couplé de manière fonctionnelle à la machine de mesure de coordonnées, l'exactitude dimensionnelle de l'au moins une dimension, en comparant ladite au moins une mesure à au moins une spécification d'objet du modèle nominal de l'objet tridimensionnel (14) ; et
modifier la suite de la production de l'objet (14) par l'imprimante de fabrication additive en fonction de l'exactitude dimensionnelle de l'au moins une dimension mesurée.

8. Procédé selon la revendication 7, dans lequel l'étape d'impression comprend l'impression (300) de l'objet (14) par l'imprimante de fabrication additive en une pluralité de couches selon le processus d'impression prescrit, notamment dans lequel l'imprimante de fabrication additive comprend une imprimante 3D, notamment dans lequel le procédé comprend en outre la détermination qu'une couche donnée a été imprimée, le procédé comprenant le mesurage d'une dimension d'au moins une caractéristique après qu'il a été déterminé que la couche donnée est imprimée.

9. Procédé selon la revendication 8, dans lequel l'étape de mesurage (304) comprend :
le mesurage de l'au moins une dimension après que l'imprimante de fabrication additive a terminé l'impression d'une couche donnée, notamment dans lequel l'imprimante de fabrication additive imprime une couche suivante après la couche donnée, l'étape de mesurage comprenant le mesurage de l'au moins une dimension avant l'impression de ladite couche suivante ;
le mesurage d'au moins une dimension lorsque l'imprimante n'imprime pas une couche de l'objet (14) ; ou
le mesurage d'au moins une dimension lorsque l'imprimante imprime une couche de l'objet (14).

10. Procédé selon la revendication 8, comprenant en outre la comparaison de la mesure et d'un modèle virtuel de l'objet (14), le procédé modifiant au moins un paramètre prescrit si la mesure est supérieure à un seuil prescrit.

11. Procédé selon la revendication 8, dans lequel l'imprimante de fabrication additive est intégrée à la machine de mesure de coordonnées ou comprend une imprimante 3D, la machine de mesure de coordonnées étant intégrée à l'imprimante 3D.

12. Produit-programme d'ordinateur destiné à être utilisé sur un système informatique afin de produire un objet physique (14), ledit produit-programme d'ordinateur comprenant un support tangible, non transitoire et utilisable par un ordinateur, sur lequel se trouve un code de programme lisible par un ordinateur, ledit code de programme lisible par un ordinateur comprenant :
un code de programme destiné à faire imprimer (300) un objet (14) par une imprimante de fabrication additive selon un processus d'impression prescrit possédant des paramètres prescrits, au moins une partie desdits paramètres prescrits étant obtenus à partir d'un modèle nominal dimensionnellement exact doté de spécifications d'objet ;
un code de programme destiné à faire mesurer (304), par une machine de mesure de coordonnées, au moins une dimension d'au moins une caractéristique de l'objet (14) pendant le processus d'impression de l'objet (14), ladite machine de mesure de coordonnées produisant au moins une mesure ;
un code de programme destiné à faire déterminer, par un vérificateur (28), l'exactitude dimensionnelle d'au moins une mesure, en comparant l'au moins une dimension à au moins une spécification d'objet du modèle nominal de l'objet tridimensionnel (14) ; et
un code de programme destiné à faire modifier, par l'imprimante de fabrication additive, la suite de la production de l'objet (14) en fonction de l'exactitude dimensionnelle de l'au moins une dimension mesurée.

13. Produit-programme d'ordinateur selon la revendication 12, dans lequel le code de programme destiné à faire imprimer (300) l'objet (14) par l'imprimante de fabrication additive comprend un code de programme destiné à faire imprimer (300) l'objet (14) par l'imprimante de fabrication additive en une pluralité de couches selon le processus d'impression prescrit, notamment dans lequel l'imprimante de fabrication additive comprend une imprimante 3D.

14. Produit-programme d'ordinateur selon la revendication 13, dans lequel le code de programme destiné à mesurer comprend un code de programme destiné à mesurer l'au moins une caractéristique après que l'imprimante de fabrication additive a terminé l'impression d'une couche donnée, notamment dans lequel
l'imprimante de fabrication additive imprime une couche suivante après la couche donnée, le code de programme destiné à faire effectuer un mesurage par une machine de mesure de coordonnées comprenant un code de programme destiné à mesurer l'au moins une caractéristique avant l'impression de ladite couche suivante ; ou
le code de programme destiné à faire effectuer un mesurage par une machine de mesure de coordonnées comprend un code de programme destiné à mesurer au moins une dimension lorsque l'imprimante n'imprime pas une couche de l'objet (14) ; ou
le code de programme destiné à faire effectuer un mesurage par une machine de mesure de coordonnées comprend un code de programme destiné à mesurer au moins une dimension lorsque l'imprimante imprime une couche de l'objet (14).

15. Produit-programme d'ordinateur selon la revendication 13, comprenant en outre un code de programme destiné à
déterminer qu'une couche donnée a été imprimée, ledit produit-programme d'ordinateur comportant un code de programme destiné à faire mesurer (304), par une machine de mesure de coordonnées, une dimension d'au moins une caractéristique après qu'il a été déterminé que la couche donnée est imprimée ; et/ou
comparer la mesure à un modèle virtuel de l'objet, le produit-programme d'ordinateur comprenant en outre un code de programme destiné à modifier au moins un paramètre prescrit si la mesure est supérieure à un seuil prescrit.
